# FASCICULE DE BREVET EUROPEEN

(11) **EP 1 308 651 B1**
(45) Date de publication et mention de la délivrance du brevet: **28.12.2005**
(21) Numéro de dépôt: 02292655.4
(22) Date de dépôt: 25.10.2002
(51) Int. Cl.: F16H 63/20

(54) **Boîte de vitesses à sélection masquée**
Getriebe mit maskiertem Wählen
Transmission with masked selection

(30) Priorité: 31.10.2001 FR 0114108
(43) Date de publication de la demande: 07.05.2003
(73) Titulaire: Renault s.a.s., 92100 Boulogne Billancourt (FR)
(72) Inventeur: Maillard, Jean Pierre, 78790 Septeuil (FR)

(56) Documents cités:
- EP-A- 0 149 020
- EP-A- 0 418 107
- DE-C- 922 508

## Description

L'invention concerne une boîte de vitesses de véhicule automobile.

Plus précisément, elle a pour objet une boîte de vitesses à arbres parallèles et à engrenages comportant des dispositifs de crabotage des pignons fous qui sont susceptibles d'être mûs par des fourchettes portées par des axes coulissant entre une position de point mort et deux positions de crabotage.

On connaît de nombreux exemples de boîtes de vitesses de ce type.

Dans une telle boîte, chaque axe de fourchettes comporte généralement au moins une fourche, plus connue techniquement sous le nom de "crabot". Dans la suite de la présente description, cette fourche sera toujours désignée par le terme "crabot".

La boîte comporte un actionneur dont un doigt est destiné à être mû transversalement pour sélectionner un crabot lié à une fourchette, puis à être mû axialement dans un sens déterminé pour craboter et/ou décraboter le pignon fou associé à ladite fourchette.

De ce fait, lors d'un passage d'un rapport courant de transmission à un rapport ultérieur de transmission associé à un autre axe de fourchette, le doigt de l'actionneur doit successivement être mû axialement pour décraboter le rapport en cours, puis être mû transversalement pour sélectionner un autre axe de fourchettes, puis à nouveau être mû axialement pour craboter le rapport ultérieur.

Cette configuration pose un problème de rapidité de passage des rapports lorsque la boîte est une boîte de vitesse robotisée dans laquelle les déplacements de l'actionneur sont automatisés.

En effet, les nombreuses opérations qui sont nécessaires pour effectuer le passage précédemment évoqué pénalisent grandement la rapidité de réaction d'une telle boîte.

Pour remédier à cet inconvénient, l'invention propose une boîte de vitesses du type décrit précédemment, dans laquelle la sélection d'un rapport ultérieur peut être "masquée", c'est à dire effectuée alors que le rapport courant est craboté.

Dans ce but, elle propose que la boîte de vitesses comporte des moyens d'actionnement des axes de fourchette dans leurs positions de crabotage, et des moyens de rappel vers leur position de point mort, indépendants desdits moyens d'actionnement.

De préférence, les moyens de rappel permettent de rappeler un premier axe vers sa position de point mort en préparant le déplacement d'un second axe vers une position de crabotage.

Selon un mode de réalisation particulier de l'invention, la boîte de vitesses comporte un doigt de crabotage et deux doigts de décrabotage.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective des axes de fourchettes d'une boîte selon l'invention représentés dans une position selon laquelle tous les axes occupent une position de point mort,
- la figure 2 est une vue en perspective d'un actionneur pour les axes de fourchettes de la figure 1,
- la figure 3 est une vue illustrant la position relative de l'actionneur de la figure 2 et des axes de fourchettes de la figure 1 lorsque tous les axes de fourchettes sont en position de point mort,
- la figure 4a est une vue latérale des branches des crabots des axes de fourchettes et des doigts de l'actionneur suivant une configuration dans laquelle les axes de fourchettes sont en position de point mort et selon laquelle l'actionneur sélectionne l'axe de fourchettes associé au rapport de marche arrière et au premier rapport de marche avant,
- la figure 4b est une vue de dessus des axes de fourchettes et de l'actionneur suivant la configuration de la figure 4a,
- la figure 5a est une vue latérale des branches des crabots des axes de fourchettes et des doigts de l'actionneur suivant une configuration dans laquelle l'axe de fourchettes associé au rapport de marche arrière et au premier rapport de marche avant est actionné pour craboter le premier rapport de marche avant à partir de la configuration de la figure 4a,
- la figure 5b est une vue de dessus des axes de fourchettes et de l'actionneur suivant la configuration de la figure 5a,
- la figure 6a est une vue latérale des branches des crabots des axes de fourchettes et des doigts de l'actionneur suivant une configuration dans laquelle l'actionneur sélectionne l'axe de fourchettes associé au deuxième et troisième rapports de marche avant à partir de la configuration de la figure 5a,
- la figure 6b est une vue de dessus des axes de fourchettes et de l'actionneur suivant la configuration de la figure 6a,
- la figure 7a est une vue latérale des branches des crabots des axes de fourchettes et des doigts de l'actionneur suivant une configuration dans laquelle l'actionneur décrabote le premier rapport de marche avant à partir de la configuration de la figure 6a,
- la figure 7b est une vue de dessus des axes de fourchettes et de l'actionneur suivant la configuration de la figure 7a,
- la figure 8a est une vue latérale des branches des crabots des axes de fourchettes et des doigts de l'actionneur suivant une configuration dans laquelle l'actionneur crabote le deuxième premier rapport de marche avant à partir de la configuration de la figure 7a, et
- la figure 8b est une vue de dessus des axes de fourchettes et de l'actionneur suivant la configuration de la figure 8a.

Dans la description qui va suivre, des chiffres de référence identiques désignent des éléments identiques.

De manière connue, une boîte de vitesses de véhicule automobile peut comporter au moins deux arbres parallèles longitudinaux (non représentés), dont l'un, communément appelé "arbre primaire", est susceptible d'être entraîné par le moteur du véhicule, notamment par l'intermédiaire d'un organe d'accouplement tel qu'un embrayage, et dont l'autre, communément appelé "arbre secondaire", entraîne un pont lié en rotation à des roues du véhicule.

De manière connue, une telle boîte comporte au moins quatre engrenages (non représentés) dans chacun desquels un pignon fou, monté à rotation sur un des arbres primaire ou secondaire, engrène avec un pignon fixe porté par l'autre arbre pour établir un rapport de transmission déterminé. La boîte comporte des crabots mobiles axialement qui sont susceptibles chacun de lier en rotation un pignon fou associé avec l'arbre qui le porte. Ces crabots sont commandés par des fourchettes associées.

Pour commander ces fourchettes (non représentées), la boîte comporte des axes 10, 12, 14,16 parallèles de fourchettes, qui sont montées coulissants dans un carter (non représenté) de la boîte, entre une position "PM" de point mort et deux positions extrêmes opposées de crabotage qui sont associées chacune à l'actionnement d'une fourchette déterminée et sur lesquelles les fourchettes sont montées par paire.

Plus particulièrement, les axes 10, 12, 14 et 16 sont orientés suivant une direction axiale "A", et chaque axe est monté coulissant dans le carter suivant cette direction A.

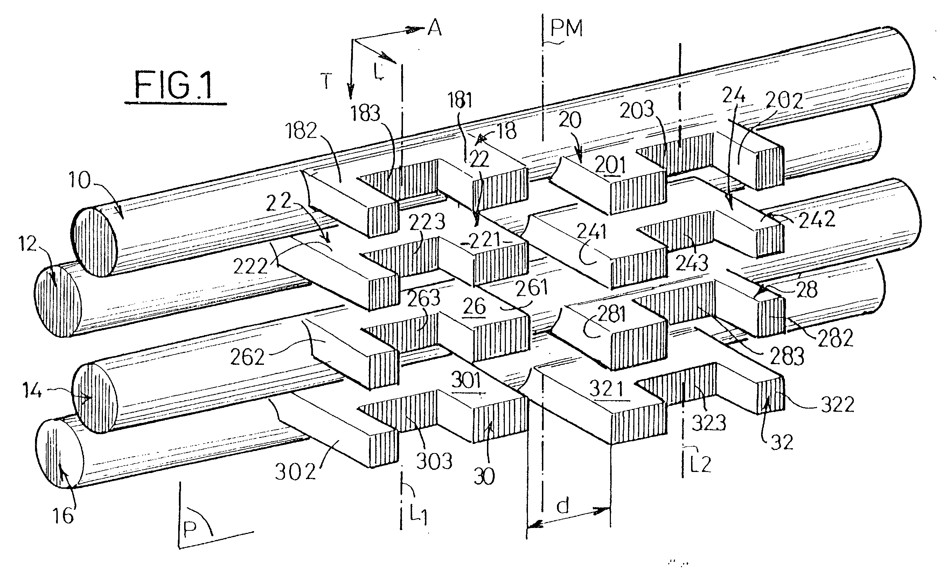

Sur la figure 1, tous les axes 10, 12, 14, 16 occupent leur position "PM" de point mort. Il sera compris que le crabotage d'un rapport ou d'un autre rapport d'un axe en vis-à-vis correspond à un déplacement de cet axe suivant la direction axiale "A" dans un sens ou dans l'autre à partir de la position "PM" de point mort.

Dans le mode de réalisation de l'invention qui a été représenté aux figures 1 à 3 et 4b à 8b, l'axe 10 de fourchettes est associé au crabotage du rapport de marche arrière et d'un premier rapport de marche avant, l'axe 12 de fourchettes est associé au crabotage de deuxième et troisième rapports de marche avant, l'axe 14 de fourchettes est associé au crabotage de quatrième et cinquième rapports de marche avant, et l'axe 16 de fourchettes est associé au crabotage d'un sixième rapport de marche avant.

Cette configuration n'est pas limitative de l'invention, et l'ordonnancement des rapports associés aux axes pourrait être différent. La boîte pourrait aussi comporter un nombre supérieur d'axes associés au crabotage d'un nombre supérieur de rapports de transmission.

Conformément à l'invention, la boîte comporte des premiers moyens communs d'actionnement des axes 10, 12, 14, 16 de leurs positions "PM" de point mort vers leurs positions de crabotage, qui sont indépendants de seconds moyens communs de rappel des axes 10, 12, 14, 16 de leurs positions de crabotage vers leurs positions "PM" de point mort, pour permettre, lorsqu'une fourchette courante associée à un rapport courant est maintenue actionnée dans sa position de crabotage par les premiers moyens, la sélection préalable d'une fourchette ultérieure associée à un rapport ultérieur par les mêmes premiers moyens, puis l'actionnement de ladite fourchette ultérieure associée au rapport ultérieur par les premiers moyens vers sa position de crabotage pendant que la fourchette courante est rappelée simultanément par les seconds moyens vers sa position "PM" de point mort.

Plus particulièrement, les premiers moyens communs d'actionnement des axes 10, 12, 14, 16 comportent par exemple, pour chaque axe 10, 12, 14, 16, deux crabots voisines 18 et 20, 22 et 24, 26 et 28, 30 et 32 comportant chacune deux branches parallèles, qui font saillie suivant la direction latérale "L" à partir de chaque axe de fourchettes 10, 12, 14, 16, lesdits crabots 18 et 20, 22 et 24, 26 et 28, 30 et 32 étant décalées, inversement l'une de l'autre de part et d'autre de la position "PM" de point mort de l'axe de fourchette, respectivement suivant une première direction "T" transversale de sélection, orthogonale à la direction axiale "A" des axes, et suivant la seconde direction axiale "A" de crabotage correspondant à celle des axes 10, 12, 14, 16.

Tous les crabots 18 et 20, 22 et 24, 26 et 28, 30 et 32 sont sensiblement agencées dans un même plan "P". Si, pour des raisons d'encombrement, les axes 10, 12, 14, 16 doivent être agencés en décalage les uns des autres suivant la direction latérale "L" comme représenté à la figure 1, les crabots 18 et 20, 22 et 24, 26 et 28, 30 et 32 sont alors prévues avec une dimension prise suivant la direction latérale "L" qui est variable pour que leurs extrémités soient toutes agencées dans le plan "P".

Dans une position de point mort de tous les axes 10 12, 14, 16 de fourchettes qui est représentée à la figure 1, les paires de crabots 18 et 20, 22 et 24, 26 et 28, 30 et 32 sont alignées deux à deux suivant la première direction transversale "T" de sélection. Ainsi la boîte de vitesses comporte une première ligne "L1" de crabots 18, 22, 26, 30 qui sont associées respectivement, du haut vers le bas de la figure 1, au crabotage des pignons fous associés au rapport de marche arrière et aux deuxième, quatrième et sixième rapport de marche avant, et une seconde ligne "L2" de crabots 20, 24, 28, 32 qui sont associées respectivement au crabotage des pignons fous associés aux premier, troisième et cinquième rapport de marche avant.

Ainsi, le crabot 18 comporte une branche 181 agencée à proximité de sa position "PM" de point mort et une branche 182 agencée à proximité de sa position de crabotage. De même, les crabots 20, 22, 24, 26, 28, 30 et 32 comportent chacune respectivement une branche 201, 221, 241, 261, 281, 301, et 321 agencée à proximité de sa position "PM" de point mort et une branche 202, 222, 242, 262, 282, 302 et 322 agencée à proximité de sa position de crabotage.

De la sorte, chaque paire de branches 181 et 182, 201 et 202, 221 et 222, 241 et 242, 261 et 262, 281 et 282, 301 et 302, 321 et 322 du crabot respectif 18, 20, 22, 24, 26, 28, 30, 32 délimite un logement respectif 183, 203, 223, 243, 263, 283, 303, 323.

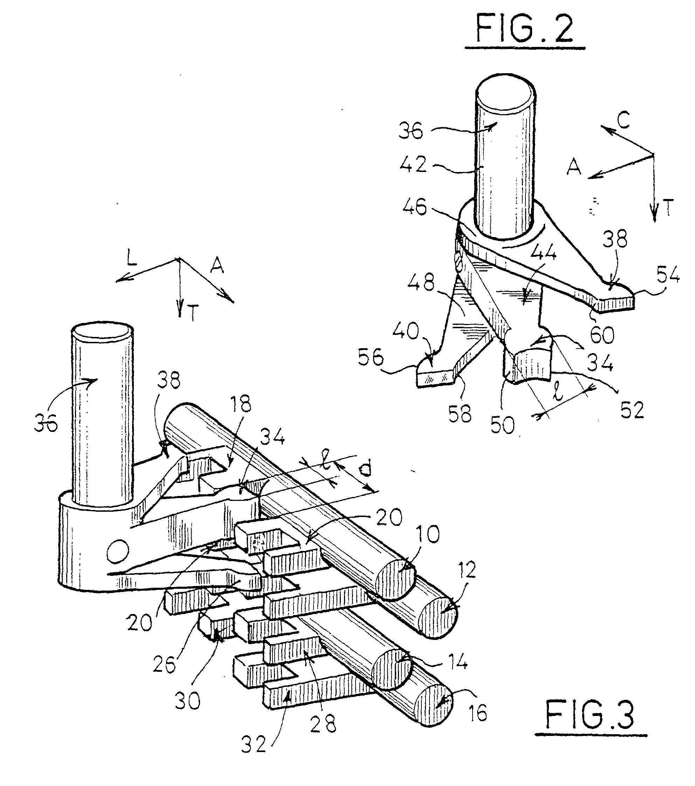

Comme l'illustrent la figure 2 et plus particulièrement la figure 3, les premiers moyens communs d'actionnement des axes 10, 12, 14, 16 comportent aussi un doigt 34 de crabotage solidaire d'un actionneur 36, commun à tous les axes 10, 12, 14, 16, qui est mobile sensiblement dans le plan "P" des crabots suivant la première direction transversale "T" de sélection et suivant la seconde direction axiale "A" de crabotage. Le doigt 34 de crabotage est d'une épaisseur transversale sensiblement égale à l'encombrement transversal des branches 181 et 201, 221 et 241, 261 et 281, 301 et 321 des deux crabots 18 et 20, 22 et 24, 26 et 28, 30 et 32 voisines.

Par ailleurs, comme l'illustrent les figures 1 et 2, le doigt 34 de crabotage est d'une largeur "I" axiale qui est inférieure à la distance axiale "d" séparant les deux crabots 18 et 20, 22 et 24, 26 et 28, 30 et 32 voisines. Comme l'illustrent les figures 3 et suivantes, cette configuration permet au doigt 34 d'être reçu entre les deux crabots 18 et 20, 22 et 24, 26 et 28, 30 et 32 voisines d'un axe 10, 12, 14, 16, 18 respectif pour pousser, comme on le verra ultérieurement, une branche adjacente 181, 201, 221, 241, 261, 281, 301 ou 321 de l'une ou l'autre des deux crabots 18, 20, 22, 24, 26, 28, ou 32, de manière à actionner l'axe 10, 12, 14, 16 associé dans le sens de crabotage d'un crabot déterminé.

Comme l'illustrent les figures 2 et suivantes, les seconds moyens communs de rappel des axes 10, 12, 14, 16, 18 comportent deux doigts 38 et 40 de décrabotage qui sont solidaires de l'actionneur 36 et qui sont décalés inversement l'un de l'autre de part et d'autre du doigt 34 de crabotage, sensiblement transversalement et axialement d'une manière analogue aux crabots 18, 20, 22, 24, 26, 28 précédemment évoquées. Chaque doigt de décrabotage 38, 40 est alternativement destiné, après que l'actionneur 36 ait été mû en rotation dans un sens déterminé pour que le doigt 34 de crabotage repousse suivant la direction "A" une branche 181, 201, 221, 241, 261, 281, 301, 321 d'un crabot 18, 20, 22, 24, 26, 28, 30, 32 déterminée associée à l'actionnement d'un crabot déterminé, l'actionneur étant alors mû transversalement suivant la direction T, à pénétrer dans l'autre crabot 18, 20, 22, 24, 26, 28, 30, 32 pour préparer le rappel dudit crabot.

Le détail des déplacements successifs de l'actionneur 36 lors d'un changement de rapport seront explicités ultérieurement dans la présente description.

Pour permettre les déplacements de l'actionneur 36 suivant les directions axiale "A" et transversale T, le corps 42 de l'actionneur commun est monté tournant et coulissant dans le carter (non représenté) de la boîte autour d'un axe de direction transversale "T".

Par ailleurs, les doigts de crabotage 34 et de décrabotage 38 et 40 sont formés aux extrémités de bras respectifs 44, 46, et 48 qui s'étendent radialement à partir du corps 42 de l'actionneur 36.

Comme l'illustre la figure 2, pour assurer le contact avec les crabots 18, 20, 22, 24, 26, 28, 30 et 32, le doigt 34 de crabotage comporte deux faces opposées 50 et 52 de contact, qui sont conformées en portion de cylindre convexe orienté suivant la première direction transversale "T", pour coopérer avec les faces adjacentes des branches 181, 201, 221, 241, 261, 281, 301, 321 des crabots 18, 20, 22, 24, 26, 28, 30 et 32.

D'une manière analogue, pour assurer le contact avec les crabots 18, 20, 22, 24, 26, 28, 30 et 32, chaque doigt 38, 40 de décrabotage comporte une face associée 54, 56 de contact, qui est tournée à l'opposé du doigt 34 de crabotage, et qui est conformée en portion de cylindre convexe orienté suivant la première direction transversale T, pour coopérer avec une face intérieure d'une branche 182, 202, 222, 242, 262, 282, 302, 322 du crabot 18, 20, 22, 24, 26, 28, 30 et 32 associé lors du rappel du crabot.

Par ailleurs, chaque doigt 38, 40 de décrabotage comporte une face d'échappement 58, 60, sensiblement positionnée dans le plan "P" lorsque le moyen d'actionnement est en position point mort pour permettre au doigt 38, 40 de décrabotage de s'échapper du crabot 18, 20, 22, 24, 26, 28, 30, 32 qui est repoussée par le doigt 34 de crabotage.

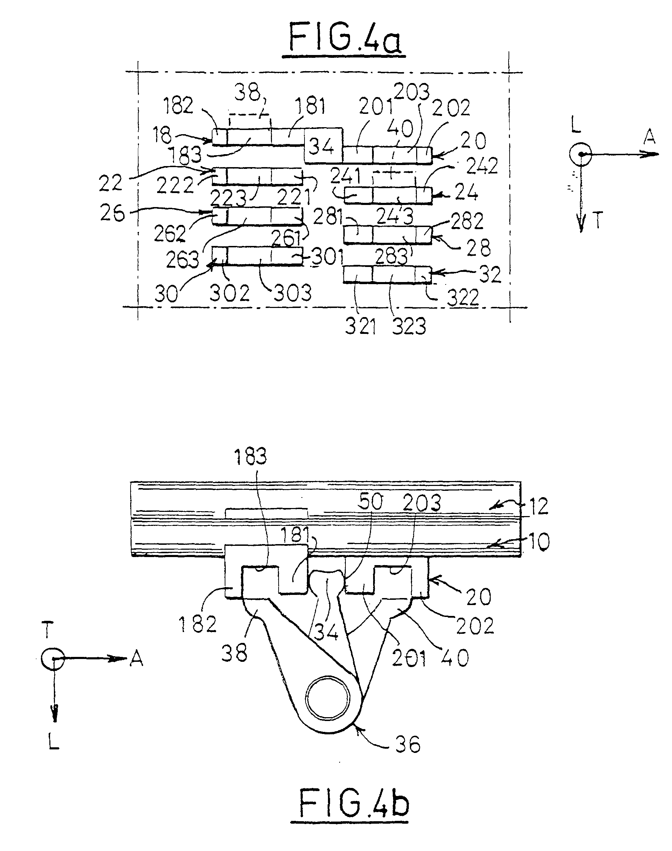

Le fonctionnement de la boîte de vitesses sera mieux compris à la lumière des figures 4a à 8b, qui illustrent à titre d'exemple le fonctionnement des moyens d'actionnement et des moyens de rappel lors du passage montant du premier rapport de marche avant au deuxième rapport de marche avant.

Dans la position de point mort des axes 10, 12 telle que représentée à la figure 4b, l'actionneur 36 occupe une position neutre dans laquelle le doigt de crabotage 34 est agencé entre les branches 181 et 201 des crabots 18 et 20 qui ne sont pas sollicitées axialement. Comme l'illustre plus particulièrement la figure 4a, le doigt de décrabotage 38 est agencé sensiblement au-dessus et en avant du logement 183 du crabot 18 et le doigt de décrabotage 40 est agencé en dessous et en avant du logement 203 du crabot 20.

Compte tenu de la configuration précédemment décrite, le crabotage du premier rapport de marche avant est obtenu à l'aide d'un mouvement de rotation de l'actionneur 36 dans le sens horaire. Le doigt de crabotage 34 pousse alors la branche 201 du crabot 20 entraînant l'axe de fourchette 10 suivant la direction A.

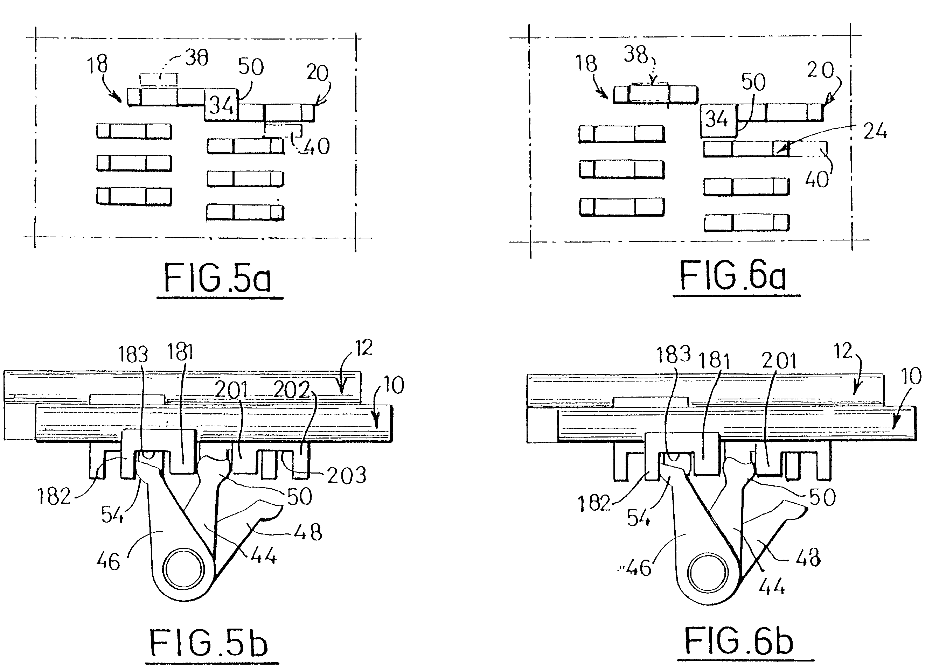

La position obtenue est celle des figures 5a et 5b. Dans cette position, la face 50 du doigt de crabotage a pris appui sur la face extérieure de la branche 201 du crabot 20, et a ainsi provoqué le crabotage du premier rapport de marche avant.

Le doigt de décrabotage 38 est toujours agencé sensiblement au-dessus et en avant du logement 183 du crabot 18 et le doigt de décrabotage 40 est toujours agencé en dessous et en avant du logement 203 du crabot 20, puisqu'ils ont tous deux accompagné le mouvement de rotation de l'actionneur 36.

A partir de cette position de crabotage du premier rapport de marche avant, la sélection du rapport suivant, c'est à dire dans la configuration présente, la sélection du deuxième rapport de marche avant, peut avantageusement être effectuée sans décraboter le premier rapport de marche avant, comme illustré aux figures 6a à 8b.

La sélection du deuxième rapport de marche avant s'effectue d'abord, comme illustré aux figures 6a et 6b, en commandant l'actionneur 36 suivant un mouvement de coulissement vers le bas de direction transversale "T".

A l'issue de ce mouvement, la face 50 du doigt 34 de crabotage a glissé le long de la face extérieure de la branche 201 du crabot 20, maintenant ainsi le premier rapport de marche avant craboté. Simultanément, le doigt de décrabotage 38 pénètre dans le logement 183 situé entre les branches 181 et 182 du crabot 18, tandis que le doigt de décrabotage 40 descend au niveau du crabot 20 sans toutefois pénétrer dans le logement 203 de celle-ci, puisque l'actionneur 36 est pivoté et que le doigt de décrabotage 40 est agencé en avant de ce crabot 20, suivant la direction latérale "L".

A l'issue de cette étape, on remarquera que le décrabotage du premier rapport de marche avant est d'ores et déjà sélectionné puisque la face de contact 54 du doigt de décrabotage 38 est prête à actionner le crabot 18 pour ramener l'axe 10 en sens inverse. De même, on remarquera que le crabotage du deuxième rapport de marche avant est déjà sélectionné puisque le doigt de crabotage 34 est axialement en regard du crabot 22 qui est susceptible de commander l'axe 12 pour provoquer le crabotage du deuxième rapport de marche avant.

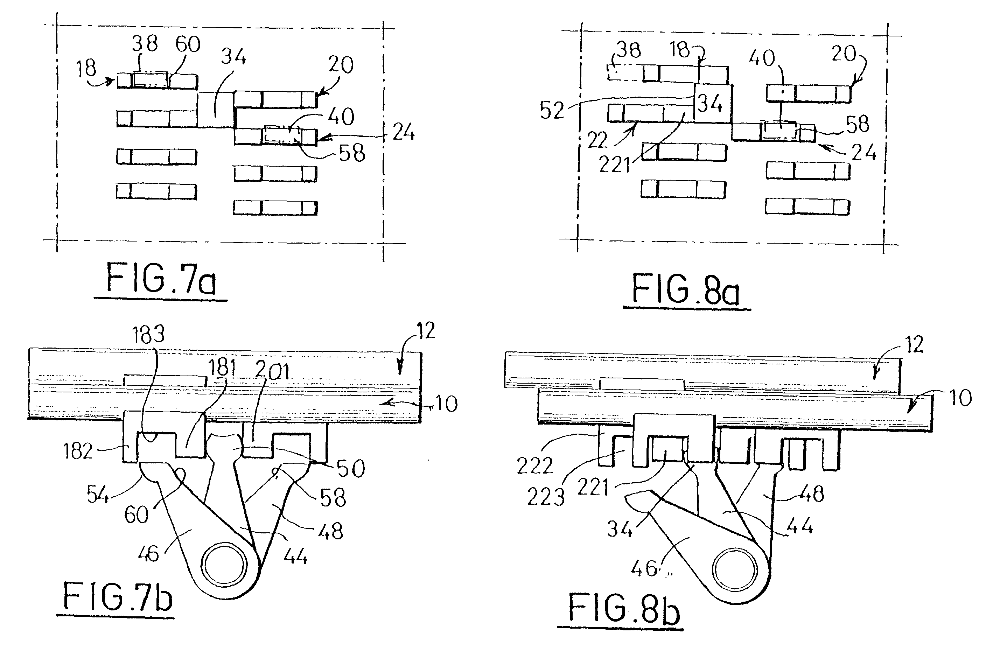

Puis, comme l'illustrent les figures 7a à 8b, l'actionneur 36 est commandé suivant un mouvement de rotation inverse, c'est à dire dans le sens anti-horaire.

Dans une première phase de ce mouvement de rotation qui est représentée aux figures 7a et 7b, l'actionneur 36 a conduit la face de contact 54 du doigt de décrabotage 38 à prendre appui sur la face intérieure de la branche 182 du crabot 18 et à pousser ainsi l'axe 10 de manière à provoquer le décrabotage du premier rapport de marche avant. Une fois le décrabotage du premier rapport de marche avant effectué, le doigt de décrabotage 38 s'échappe du logement 183 du crabot 18, sa face d'échappement 60 ne rencontrant pas le crabot 18 au cours du mouvement de rotation de l'actionneur 36.

Simultanément, le doigt 34 de crabotage, qui se déplace sensiblement axialement, passe sous le crabot 18 et se rapproche du crabot 22.

On remarquera que le doigt de décrabotage 40 pénètre alors dans le logement 203 du crabot 20 pour préparer le rappel de l'axe 12 vers sa position de point mort dans le cas où l'on effectuerait un passage descendant du deuxième rapport de marche avant au premier rapport de marche avant ou "rétrogradage", d'une manière identique à celle selon laquelle le doigt de décrabotage effectue a effectué le rappel de l'axe 10 vers sa position de point mort. Ceci est rendu possible par la configuration sensiblement plane de la face d'échappement 58 du doigt de décrabotage 40 qui ne s'oppose pas à la pénétration dans le logement 203.

Enfin, dans une seconde phase du mouvement de rotation inverse de l'actionneur 36 qui est représentée aux figures 8a et 8b, le mouvement de rotation de l'actionneur 36 conduit la face 52 du doigt 34 de crabotage à prendre appui sur la face extérieure de la branche 221 du crabot 22, ce qui a pour effet de pousser le crabot 22 et d'actionner l'axe 12 dans le sens du crabotage du deuxième rapport de marche avant.

Le doigt de décrabotage 40 demeure dans le logement 203 du crabot 20, prêt à préparer le rappel de l'axe 12 vers sa position de point mort pour un rétrogradage éventuel.

Il sera compris que le doigt de crabotage 34 est destiné à permettre le crabotage des rapports de la boîte, alors que les doigts 38 et 40 sont sélectivement destinés à permettre le décrabotage des rapports de la boîte en fonction du sens montant ou descendant des changements de rapport. Le doigt 38 de décrabotage est destiné à assurer le décrabotage d'un des axes 10, 12, 14, 16 lors d'un passage montant, tandis que le doigt 40 de décrabotage est destiné à assurer le décrabotage d'un des axes 10, 12, 14, 16 lors d'un passage descendant, ou rétrogradage.

L'invention trouve à s'appliquer dans le cadre d'une commande automatisée de l'actionneur 36, et elle permet avantageusement d'effectuer la sélection d'un rapport ultérieur alors que le rapport courant est engagé. La sélection est dite "masquée".

A ce titre, la boîte de vitesses selon l'invention permet de réduire considérablement la durée de passage des rapports d'une telle boîte.

## Revendications

1. Boîte de vitesses à arbres parallèles et à engrenages comportant des dispositifs de crabotage des pignons fous liés à des fourchettes coulissantes mûes par des axes (10, 12, 14, 16) mobiles entre une position de point mort et deux positions de crabotage, **caractérisée en ce qu'**elle comporte des moyens d'actionnement des axes (10, 12, 14, 16) de fourchettes vers leurs positions de crabotage et des moyens de rappel des axes (10, 12, 14, 16) de fourchettes vers leur position de point mort indépendants desdits moyens d'actionnement.

2. Boîte de vitesses selon la revendication 1, **caractérisée en ce que** les moyens de rappel permettent de rappeler un premier axe (10) de fourchettes vers sa position de point mort tandis qu'ils sélectionnent un second axe (12) de fourchettes préalablement à son déplacement vers une position de crabotage.

3. Boîte de vitesses selon la revendication 1 ou 2, **caractérisée en ce que** chaque axe (10, 12, 14, 16) de fourchette est lié à deux crabots (18, 20, 22, 24, 26, 28, 30, 32) décalés axialement et transversalement.

4. Boîte de vitesses selon l'une quelconque des revendications 1 à 3, **caractérisée en ce qu'**elle comporte un doigt de crabotage (34) mobile suivant une direction transversale de sélection et une direction axiale de crabotage et deux doigts de décrabotage (38, 40).

5. Boîte de vitesses selon la revendication précédente, **caractérisée en ce que** le doigt de crabotage (24) a une épaisseur transversale sensiblement égale à l'encombrement transversal des branches de deux crabots voisins sur un axe, et une largeur axiale inférieure à la distance séparant les deux crabots voisins, de manière à être reçu entre ceux-ci pour pousser vers leurs positions de crabotage.

6. Boîte de vitesses selon la revendication 4 ou 5, **caractérisée en ce que** les deux doigts de décrabotage (38, 40) sont décalés transversalement et axialement de façon opposée par rapport au doigt de crabotage (34) de manière à pénétrer dans un crabot d'un premier axe en vue du rappel e celle-ci dans sa position de point mort préalablement au déplacement d'un second axe vers sa position de point mort.

7. Boîte de vitesses selon la revendication 4, 5 ou 6, **caractérisée en ce que** le doigt de crabotage (34) et les deux doigts de crabotage (38, 40) sont montés sur un actionneur commun (36) dont le corps (42) est monté tournant et coulissant dans le carter de la boîte.

8. Boîte de vitesses selon l'une des revendications 4 à 7, **caractérisée en ce que** les doigts (34) de crabotage et de décrabotage (38, 40) sont formés aux extrémités de bras (44, 46, 48) qui s'étendent radialement à partir du corps (42) de l'actionneur (36).

9. Boîte de vitesses selon l'une des revendications 4 à 8, **caractérisée en ce que** le doigt (34) de crabotage comporte deux faces (50, 52) coopérant avec les faces adjacentes des branches (181, 201, 221, 241, 261, 281, 301, 321) des crabots (18, 20, 22, 24, 26, 28, 30, 32).

10. Boîte de vitesses selon l'une des revendications 6 à 9, **caractérisée en ce que** chaque doigt (38, 40) de décrabotage comporte une face (54, 56) de contact, coopérant avec une face intérieure d'une branche (182, 202, 222, 242, 262, 282, 302, 322) du crabot (18, 20, 22, 24, 26, 28, 30, 32) associé lors du rappel de l'axe.

11. Boîte de vitesses selon l'une des revendications 4 à 10, **caractérisée en ce que** chaque doigt (38, 40) de décrabotage comporte une face (58, 60) d'échappement, pour permettre au doigt (38, 40) de décrabotage de s'échapper du crabot (18, 20, 22, 24, 26, 28, 30, 32) qui est repoussée par le doigt de crabotage (34).

12. Boîte de vitesses selon l'une des revendications, **caractérisée en ce que**, dans la position (PM) de point mort de tous les axes (10, 12, 14, 16), les paires de crabots (18, 20, 22, 24, 26, 28, 30, 32) sont alignées deux à deux suivant la première direction (T) transversale de sélection.

13. Boîte de vitesses selon la revendication précédente, **caractérisée en ce qu'**elle comporte une première ligne (L1) de crabots (18, 22, 26, 30) qui sont associées respectivement au crabotage des pignons fous associés au rapport de marche arrière et aux deuxième, quatrième et sixième rapport de marche avant, et une seconde ligne (L2) de crabots (20, 24, 28, 32) qui sont associées respectivement au crabotage des pignons fous associés aux premier, troisième et cinquième rapport de marche avant.

## Patentansprüche

1. Getriebe mit parallelen Wellen und mit Zahnrädern, welches Klauenkupplungsvorrichtungen für bewegliche Ritzel aufweist, die mit verschiebbaren Gabeln verbunden sind, welche durch Achsen (10, 12, 14, 16) bewegt werden, die zwischen einer Totpunktstellung und zwei Klauenkupplungsstellungen beweglich sind, **dadurch gekennzeichnet, dass** es Mittel zur Betätigung der Achsen (10, 12, 14, 16) der Gabeln in Richtung ihrer Klauenkupplungsstellungen aufweist und von den Betätigungsmitteln unabhängige Rückstellmittel der Achsen (10, 12, 14, 16) der Gabeln in Richtung ihrer Totpunktstellung.

2. Getriebe nach Anspruch 1, **dadurch gekennzeichnet, dass** die Rückstellmittel das Zurückstellen einer ersten Gabelachse (10) in ihre Totpunktstellung ermöglichen, während sie eine zweite Gabelachse (12) vor ihrer Verstellung in Richtung einer Klauenkupplungsstellung auswählen.

3. Getriebe nach Anspruch 1 oder 2, **dadurch gekennzeichnet, dass** jede Gabelachse (10, 12, 14, 16) mit zwei Klauen (18, 20, 22, 24, 26, 28, 30, 32) verbunden ist, welche axial und transversal versetzt sind.

4. Getriebe nach irgendeinem der Ansprüche 1 bis 3, **dadurch gekennzeichnet, dass** es einen Klauenkupplungsfinger (34) aufweist, der gemäß einer transversalen Auswahlrichtung und einer axialen Klauenkupplungsrichtung beweglich ist, und zwei Entkupplungsfinger (38, 40).

5. Getriebe nach dem vorangegangenen Anspruch, **dadurch gekennzeichnet, dass** der Klauenkupplungsfinger (24) eine transversale Dicke im Wesentlichen gleich dem transversalen Raumbedarf der Äste von zwei an einer Achse benachbarten Klauen aufweist und eine geringere axiale Breite als der Abstand, welcher die zwei benachbarten Klauen voneinander trennt, um zwischen diesen aufgenommen zu werden, um sie in Richtung ihrer Klauenkupplungsstellungen zu drücken.

6. Getriebe nach Anspruch 4 oder 5, **dadurch gekennzeichnet, dass** die zwei Entkupplungsfinger (38, 40) transversal und axial auf entgegengesetzte Weise im Verhältnis zu dem Klauenkupplungsfinger (34) in einer Weise versetzt sind, um in eine Klaue einer ersten Achse im Hinblick auf das Zurückstellen von diesem in seine Totpunktstellung vor der Verstellung einer zweiten Achse in Richtung ihrer Totpunktstellung einzudringen.

7. Getriebe nach Anspruch 4, 5 oder 6, **dadurch gekennzeichnet, dass** der Klauenkupplungsfinger (34) und die zwei Entkupplungsfinger (38, 40) an einem gemeinsamen Betätigungselement (36) montiert sind, dessen Körper (42) drehend und verschiebbar in dem Gehäuse des Getriebes montiert ist.

8. Getriebe nach einem der Ansprüche 4 bis 7, **dadurch gekennzeichnet, dass** der Klauenkupplungsfinger (34) und die Entkupplungsfinger (38, 40) an den Enden des Arms (44, 46, 48) ausgebildet sind, der sich radial ausgehend vom Körper (42) des Betätigungselements (36) erstreckt.

9. Getriebe nach einem der Ansprüche 4 bis 8, **dadurch gekennzeichnet, dass** der Klauenkupplungsfinger (34) zwei Seiten (50, 52) aufweist, welche mit den angrenzenden Seiten der Äste (181, 201, 221, 241, 261, 281, 301, 321) der Klauen (18, 20, 22, 24, 26, 28, 30, 32) zusammenwirken.

10. Getriebe nach einem der Ansprüche 6 bis 9, **dadurch gekennzeichnet, dass** jeder Entkupplungsfinger (38, 40) eine Kontaktseite (54, 56) aufweist, welche mit einer inneren Seite eines Astes (182, 202, 222, 242, 262, 282, 302, 322) der zugehörigen Klaue (18, 20, 22, 24, 26, 28, 30, 32) während der Rückstellung der Achse zusammenwirkt.

11. Getriebe nach einem der Ansprüche 4 bis 10, **dadurch gekennzeichnet, dass** jeder Entkupplungsfinger (38, 40) eine Austrittsseite (58, 60) aufweist, um es dem Entkupplungsfinger (38, 40) zu ermöglichen, aus der Klaue (18, 20, 22, 24, 26, 28, 30, 32) herauszugehen, welche durch den Klauenkupplungsfinger (34) zurückgestoßen wird.

12. Getriebe nach einem der vorangegangenen Ansprüche, **dadurch gekennzeichnet, dass** in der Totpunktstellung (PM) aller Achsen (10, 12, 14, 16) die Paare von Klauen (18, 20, 22, 24, 26, 28, 30, 32) jeweils zwei zu zwei gemäß der ersten, transversalen Auswahlrichtung (T) ausgerichtet sind.

13. Getriebe nach dem vorangegangenen Anspruch, **dadurch gekennzeichnet, dass** es eine erste Linie (L1) von Klauen (18, 22, 26, 30) aufweist, welche jeweils zur Klauenkupplung von beweglichen Ritzeln gehören, die zum Rückwärtsgang und zum zweiten, vierten und sechsten Vorwärtsgang gehören, und eine zweite Linie (L2) von Klauen (20, 24, 28, 32), welche jeweils zur Klauenkupplung von beweglichen Ritzeln gehören, die zum ersten, dritten und fünften Vorwärtsgang gehören.

## Claims

1. A gear box with parallel shafts and gears comprising devices for dog-clutching of the idler sprockets connected to sliding forks moved by spindles (10, 12, 14, 16) which may be moved between a dead centre position and two dog-clutching positions, **characterised in that** it comprises means actuating the fork spindles (10, 12, 14, 16) towards their claw dog-clutching positions and means for recalling the spindles (10, 12, 14, 16) towards their dead centre position independent from the actuation means.

2. A gear box as claimed in claim 1, **characterised in that** the recall means make it possible to recall a first fork spindle (10) towards its dead centre position while they select a second fork spindle (12) prior to its displacement into a dog-clutching position.

3. A gear box as claimed in claim 1 or 2, **characterised in that** each fork spindle (10, 12, 14, 16) is coupled to two dog clutches (18, 20, 22, 24, 26, 28, 30, 32) offset axially and transversely.

4. A gear box as claimed in any one of claims 1 to 3, **characterised in that** it comprises a dog-clutching finger (34) moving in a transverse direction of selection and an axial direction of dog-clutching and two dog-clutching release fingers (38, 40).

5. A gear box as claimed in the preceding claim, **characterised in that** the dog-clutching finger (24) has a transverse thickness substantially equal to the transverse bulk of the arms of two neighbouring dog clutches on a spindle, and an axial width smaller than the distance separating the two neighbouring dog clutches so as to be received between the latter in order to urge them into their dog-clutching positions.

6. A gear box as claimed in claim 4 or 5, **characterised in that** the two dog-clutching release fingers (38, 40) are offset transversely and axially in an opposing manner with respect to the dog-clutching finger (34) so as to penetrate into a dog clutch of a first spindle in order to recall the latter into its dead centre position prior to the displacement of a second spindle into its dead centre position.

7. A gear box as claimed in claim 4, 5 or 6, **characterised in that** the dog-clutching finger (34) and the two dog-clutching release fingers (38, 40) are mounted on a common actuator (36) whose body (42) is mounted to rotate and slide in the casing of the box.

8. A gear box as claimed in one of claims 4 to 7, **characterised in that** the dog-clutching (34) and dog-clutching release (38, 40) fingers are formed at the ends of arms (44, 46, 48) which extend radially from the body (42) of the actuator (36).

9. A gear box as claimed in one of claims 4 to 8, **characterised in that** the dog-clutching finger (34) comprises two surfaces (50, 52) cooperating with adjacent surfaces of the arms (181, 201, 221, 241, 261, 281, 301, 321) of the dog clutches (18, 20, 22, 24, 26, 28, 30, 32).

10. A gear box as claimed in one of claims 6 to 9, **characterised in that** each dog-clutching release finger (38, 40) comprises a contact surface (54, 56) cooperating with an inner surface of an arm (182, 202, 222, 242, 262, 282, 302, 322) of the associated dog clutch (18, 20, 22, 24, 26, 28, 30, 32) during the recall of the spindle.

11. A gear box as claimed in one of claims 4 to 10, **characterised in that** each dog-clutching release finger (38, 40) comprises an escape surface (58, 60) to enable the dog-clutching release finger (38, 40) to escape from the dog clutch (18, 20, 22, 24, 26, 28, 30, 32) which is pushed back by the dog-clutching finger (34).

12. A gear box as claimed in any one of the claims, **characterised in that**, in the dead centre position (PM) of all the spindles (10, 12, 14, 16), the pairs of dog clutches (18, 20, 22, 24, 26, 28, 30, 32) are aligned in pairs in the first transverse direction (T) of selection.

13. A gear box as claimed in the preceding claim, **characterised in that** it comprises a first line (L1) of dog clutches (18, 22, 26, 30) which are associated respectively with the dog-clutching of the idler sprockets associated with the reverse gear ratio and the second, fourth and sixth forward gear ratios, and a second line (L2) of dog clutches (20, 24, 28, 32) which are associated respectively with the dog-clutching of the idler sprockets associated with the first, third and fifth forward gear ratios.
